# EUROPÄISCHE PATENTSCHRIFT

(11) **EP 2 776 768 B1**
(45) Veröffentlichungstag und Bekanntmachung des Hinweises auf die Patenterteilung: **10.01.2018**
(21) Anmeldenummer: 12786898.2
(22) Anmeldetag: 02.11.2012
(51) Int. Cl.: F25D 11/00, F25D 29/00, F25B 5/04

(54) **Kältegerät**
REFRIGERATION DEVICE
APPAREIL FRIGORIFIQUE

(30) Priorität: 08.11.2011 DE 102011085959
(43) Veröffentlichungstag der Anmeldung: 17.09.2014
(73) Patentinhaber: BSH Hausgeräte GmbH, 81739 München (DE)
(72) Erfinder: IHLE, Hans, 89537 Giengen (DE); NUIDING, Wolfgang, 89537 Giengen (DE)
(86) Internationale Anmeldenummer: PCT/EP2012/071702
(87) Internationale Veröffentlichungsnummer: WO 2013/068303

(56) Entgegenhaltungen:
- WO-A1-2006/124004
- WO-A2-2010/133506
- DE-A1- 3 317 083
- DE-C1- 19 828 061

## Beschreibung

Die vorliegende Erfindung betrifft ein Kältegerät, insbesondere ein Haushaltskältegerät, mit wenigstens zwei Temperaturzonen, die durch in Reihe verbundene Verdampfer gekühlt sind. DE 33 17 083 A1 offenbart ein Kältegerät gemäß dem Oberbegriff des Anspruchs 1. Bei einem solchen sogenannten Einkreis-Kältegerät kann das Kältemittel entweder nur durch beide in Reihe verbundenen Verdampfer gleichzeitig oder durch keinen von beiden zirkulieren. Es besteht daher die Gefahr, dass, wenn der Verdichter anhand des Kältebedarfs nur von einer der beiden Temperaturzonen gesteuert wird, sich in der anderen eine unerwünscht hohe oder niedrige Temperatur einstellt. In der Praxis wirkt sich dieses Problem nur dann nicht aus, wenn der Kältebedarf der beiden Kältezonen exakt proportional ist und die Leistungsfähigkeit der Verdampfer auf das Proportionsverhältnis abgestimmt ist.

Signifikante Abweichungen von der Proportionalität können jedoch z.B. durch die Temperatur der Umgebung, in der das Kältegerät aufgestellt ist, verursacht werden: ist die Umgebungstemperatur niedriger als die, für die die Leistung der Verdampfer optimiert ist, dann nimmt der Kältebedarf der wärmeren Temperaturzone stärker ab als der der kälteren. Wenn die Steuerung des Verdichters anhand des Kältebedarfs der wärmeren Temperaturzone erfolgt, dann ist eine unzureichende Kühlung der kälteren die Folge. Ein herkömmliches Mittel, um diesem Problem abzuhelfen, ist unter der Bezeichnung "Winterschaltung" bekannt. Die wärmere Temperaturzone weist eine Wärmequelle wie etwa eine Widerstandsheizung oder eine elektrische Leuchte auf, die betrieben wird, um den Kältebedarfs der wärmeren Temperaturzone künstlich soweit zu erhöhen, dass die Kühlleistung auch für die kältere Temperaturzone ausreicht. Es liegt auf der Hand, dass eine solche Winterschaltung den Wirkungsgrad des Kältegeräts empfindlich beeinflusst.

Eine weitere Ursache für Abweichungen von der Proportionalität ist die Einlagerung von warmem Kühlgut. Geschieht dies in der geregelten Temperaturzone, dann ist die Folge eine Verlängerung der Verdichterlaufzeit und damit eine eventuell unnötig starke Kühlung auch der ungeregelten Temperaturzone, was normalerweise, insbesondere wenn die ungeregelte die kältere Temperaturzone ist, nicht weiter stört. Wird jedoch warmes Kühlgut in die ungeregelte Temperaturzone geladen, dann kann dessen Abkühlung sehr lange Zeit in Anspruch nehmen, und bereits in der dieser Temperaturzone enthaltenes Kühlgut kann so stark erwärmt werden, dass dadurch seine Haltbarkeit beeinträchtigt wird. Um diesem Problem Rechnung zu tragen, verfügen die meisten Kältegeräte über einen Hochleistungsmodus, der vom Benutzer eingeschaltet werden kann und sollte, wenn er eine größere Menge warmen Kühlguts einlädt. Auch der Hochleistungsmodus behebt jedoch nicht den grundsätzlichen Nachteil der Einkreis-Kältegeräte, dass die Verdampfer nicht unabhängig voneinander funktionieren: wenn eine der Temperaturzonen ein Normalkühlfach ist, dann darf auch im Hochleistungsmodus die Temperatur dort 0°C nicht unterschreiten, da anderenfalls Schäden am Kühlgut zu erwarten sind. Diese Einschränkung begrenzt erheblich die Kühlleistung, die zum Kühlen der jeweils anderen Temperaturzone bereitgestellt werden kann, und führt somit dort zu langen Abkühlzeiten und der Gefahr einer übermäßigen Erwärmung bereits vorhandenen Kühlguts.

Aus DE 197 18 609 A1 ist ein weiteres Kältegerät bekannt. In diesem Dokument wird vorgeschlagen, das Problem der unzureichenden Kühlung der kälteren Temperaturzone bei niedriger Umgebungstemperatur durch ein Steuerverfahren zu lösen, bei dem die relative Einschaltdauer des Verdichters anhand eines Vergleichs der Lufttemperatur in der geregelten Temperaturzone mit einer Solltemperatur festgelegt wird und anhand einer empirisch festgelegten Tabelle zu jeder relativen Einschaltdauer die absolute Einschaltdauer des Verdichters festgelegt ist. Zwar ist diese Technik grundsätzlich geeignet, um eine Winterschaltung überflüssig zu machen, doch erfordern die Testreihen, anhand derer der Zusammenhang zwischen relativer und absoluter Einschaltdauer festgelegt wird, einen erheblichen, für jedes Gerätemodell von Neuem zu erbringenden Entwicklungsaufwand. Die Regelung ist sehr träge, da, wenn in einer Ruhephase des Verdichters eine Änderung der relativen Einschaltdauer vorgenommen wird, diese sich erst gegen Ende der darauffolgenden Betriebsphase des Verdichters auf die Temperatur im Kältegerät auswirken kann. Eine Lösung des Problems der langen Abkühlzeiten von in die ungeregelte Temperaturzone geladenem frischem Kühlgut ist mit dieser herkömmlichen Technik nicht erreichbar.

Aufgabe der vorliegenden Erfindung ist, ein Einkreis-Kältegerät zu schaffen, dass ohne Rückgriff auf aufwendig zu entwickelnde empirische Kennkurven in der Lage ist, gewünschte Temperaturen in zwei unterschiedlichen Temperaturzonen auch bei wechselnden Umgebungstemperaturen aufrechtzuerhalten, bzw. das in der Lage ist, frisch eingeladenes Kühlgut auch in einer ungeregelten Temperaturzone zügig zu kühlen, ohne dass dies in einer anderen Temperaturzone zu unzweckmäßigen Temperaturabweichungen führt.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination oder ein Weinlagerschrank.

Die Aufgabe wird durch ein Kältegerät gemäß Anspruch 1 gelöst. Der erste Temperaturfühler kann am stromabwärtigen Verdampfer selbst, in einer stromaufwärtigen Region desselben, angeordnet sein, um, wenn flüssiges Kältemittel in den stromabwärtigen Verdampfer eingedrungen ist, dies mit geringer Verzögerung zu erkennen. Indem dann der Verdichter ausgeschaltet wird, bleibt die Menge an flüssigem Kältemittel im stromabwärtigen Verdampfer gering, wohingegen der stromaufwärtige Verdampfer im Wesentlichen mit flüssigem Kältemittel gefüllt sein wird, sodass zwar der stromaufwärtige Verdampfer seine Temperaturzone wirksam kühlt, der stromabwärtige jedoch nicht oder nur in geringerem Umfang.

Vorzugsweise ist vom stromaufwärtigen Verdampfer gekühlte Temperaturzone kälter als die vom stromabwärtigen Verdampfer gekühlte.

Die Temperaturabnahme, die zum Ausschalten des Verdichters führt, ist dann vorzugsweise die zweite, die nach Einschalten des Verdichters erfassbar ist, da erst diese auf das Eintreffen von flüssigem Kältemittel in der Nähe des Temperaturfühlers hinweist. Eine erste Temperaturabnahme, die mit sehr geringer Verzögerung nach Einschalten des Verdichters erfassbar ist, zeigt lediglich den Zufluss von gasförmigem Kältemittel aus dem stromaufwärtigen, kälteren Verdampfer in den stromabwärtigen Verdampfer an.

Bei ungünstiger Platzierung des Temperaturfühlers kann es vorkommen, dass die erfasste Temperatur zwischen der kurz nach Einschalten des Verdichters einsetzenden Abkühlung und der auf das Eintreffen von flüssigem Kältemittel zurückzuführenden kein zeitweiliges Minimum annimmt, anhand dessen eine Unterscheidung zwischen erster und zweiter Abkühlung auf einfache Weise möglich wäre. Möglich ist aber auch in diesem Fall, die Abnahmegeschwindigkeit der Temperatur zu überwachen und den Verdichter auszuschalten, sobald nach einer zeitweiligen Verringerung eine erneute Steigerung der Abnahmegeschwindigkeit beobachtet wird.

Alternativ kann vorgesehen werden, dass die Temperaturabnahme erst dann zum Ausschalten des Verdichters führt, wenn die von dem ersten Temperaturfühler erfasste Temperatur eine Grenztemperatur unterschritten hat, die niedriger ist als eine Solltemperatur der vom stromabwärtigen Verdampfer gekühlten Temperaturzone. Die Grenztemperatur kann je nach Bauart des Kältegeräts unterschiedlich festgelegt sein, sollte aber jedenfalls so tief gewählt sein, dass sie nach einer Ruhephase des Verdichters nur durch flüssiges Kältemittel erreichbar ist.

Der erste Temperaturfühler kann auch in einer stromabwärtigen Region des stromaufwärtigen Verdampfers angeordnet sein, um anzusprechen, wenn dieser weitgehend mit flüssigem Kältemittel aufgefüllt ist, der stromabwärtige jedoch noch nicht. In diesem Fall ist die Steuerung des Kältegeräts vereinfacht, da nur der Zustrom von flüssigem Kältemittel eine Temperaturabnahme am ersten Temperaturfühler bewirken kann und folglich eine Unterscheidung zwischen erster und zweiter Temperaturabnahme oder der Vergleich mit einer Solltemperatur unnötig ist.

In dem oben erwähnten Betriebsmodus gibt es vorzugsweise zwei Bedingungen, die jeweils für sich allein ausreichend sind, um zum Einschalten des Verdichters zu führen, zum einen, wenn die Temperatur in der vom stromabwärtigen Verdampfer gekühlten Temperaturzone einen Grenzwert übersteigt, zum anderen, wenn die seit dem letzten Ausschalten des Verdichters verstrichene Zeit einen Grenzwert übersteigt. Die erstere Bedingung entspricht in an sich üblicher Weise dem Auftreten von Kältebedarf in der vom stromabwärtigen Verdampfer gekühlten Temperaturzone; um diesen Kältebedarf zu befriedigen, muss der Verdichter lange genug arbeiten, damit eine ausreichende Menge an flüssigem Kältemittel den stromabwärtigen Verdampfer erreicht. Wenn hingegen das Einschalten durch Überschreitung des Grenzwerts der Zeit verursacht war, besteht kein Kältebedarf am stromabwärtigen Verdampfer, und die Laufzeit des Verdichters wird zweckmäßigerweise so beschränkt, dass flüssiges Kältemittel den stromabwärtigen Verdampfer nicht oder allenfalls in geringer Menge erreicht.

Der oben beschriebene Betriebsmodus kann durch einen Benutzer einschaltbar sein, um eine leistungsstarke Kühlung der Temperaturzone des stromaufwärtigen Verdampfers zu bewirken, falls dort frisches Kühlgut eingelagert worden ist oder werden soll.

Ein solcher Betriebsmodus wird zweckmäßigerweise von der Steuerschaltung nach einer vorgegebenen Zeit automatisch wieder ausgeschaltet.

Alternativ oder ergänzend kann die Steuerschaltung eingerichtet sein, die relative Einschaltdauer des Verdichters zu erfassen und selbsttätig den oben beschriebenen Betriebsmodus einzuschalten, wenn die Tatsache, dass die relative Einschaltdauer unter einem vorgegebenen Grenzwert liegt, auf eine niedrige Umgebungstemperatur schließen lässt.

Kältemittel, das beim Einschalten des Verdichters in Bewegung gerät und vom stromaufwärtigen zum stromabwärtigen Verdampfer gelangt, erlaubt mittels des dort angebrachten ersten Temperaturfühlers unter Umständen einen Rückschluss auf die am stromaufwärtigen Verdampfer herrschende Temperatur. Wenn diese Temperatur zu hoch ist, weil beispielsweise eine große Menge warmem Kühlguts in die vom stromaufwärtigen Verdampfer gekühlte Temperaturzone eingeladen worden ist, dann ist auch das Kältemittel, das zu Beginn des Verdichterbetriebs auf den ersten Temperaturfühler einwirkt, relativ warm. Daher kann, wenn der vom ersten Temperaturfühler beim Einschalten des Verdichters erfasste Temperaturabfall schwächer ist als normal, daraus auf eine hohe Temperatur des stromaufwärtigen Verdampfers und auf entsprechend erhöhten Kältebedarf dieses Verdampfers geschlossen werden. Um diesen erhöhten Kältebedarf zu befriedigen, kann der oben beschriebene Betriebsmodus eingesetzt werden.

Weitere Merkmale und Vorteile der Erfindung ergeben sich aus der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: eine schematische Darstellung eines erfindungsgemäßen Kältegeräts;
- Fig. 2: eine Variante des Kältegeräts in einer zu Fig. 1 analogen Ansicht;
- Fig. 3: typische zeitliche Entwicklungen der vom Verdampfer-Temperaturfühler des Kältegeräts aus Fig. 1 oder 2 erfassten Temperatur;
- Fig. 4: ein Flussdiagramm eines ersten Arbeitsverfahrens der Steuerschaltung des Kältegeräts aus Fig. 1 oder 2;
- Fig. 5: ein Flussdiagramm eines zweiten Arbeitsverfahrens; und
- Fig. 6: ein Flussdiagramm eines dritten Arbeitsverfahrens der Steuerschaltung.

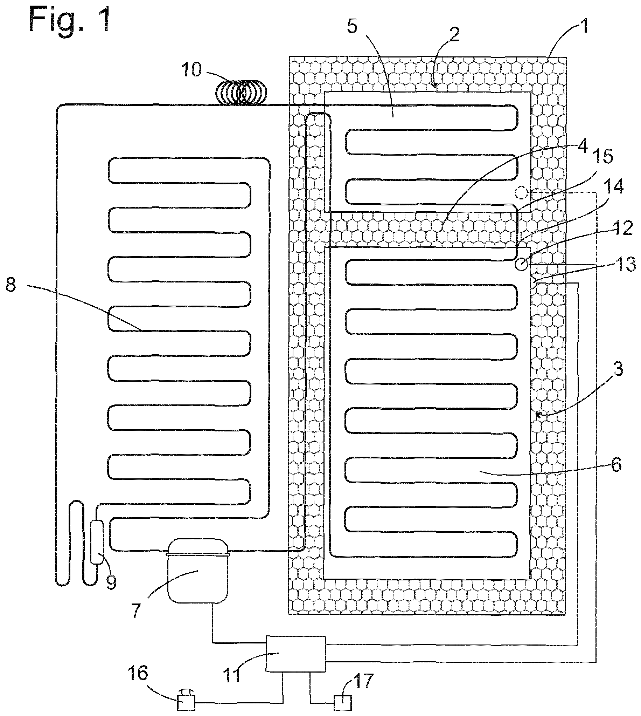

Fig. 1 zeigt schematisch ein Einkreis-Haushaltskältegerät mit einem wärmeisolierenden Gehäuse 1, dessen Innenraum in zwei Temperaturzonen, hier ein Gefrierfach 2 und ein Normalkühlfach 3, unterteilt ist. Die Unterteilung ist hier eine Wand 4, die wie die die Fächer 2, 3 umgebenden Wände des Gehäuses 1 mit Isoliermaterial ausgefüllt ist; die zwei Temperaturzonen könnten aber auch in einem zusammenhängenden Innenraum des Gehäuses 1 gebildet oder lediglich durch eine den Luftaustausch zwischen ihnen behindernde Wandung getrennt sein.

Beiden Temperaturzonen, Gefrierfach 2 und Normalkühlfach 3, ist jeweils ein Verdampfer 5 bzw. 6 zugeordnet. Vorzugsweise sind die Verdampfer 5, 6 als Coldwall-Verdampfer ausgebildet, es kommen aber auch andere Verdampfertypen in Betracht. Die Verdampfer 5, 6 können auf getrennten Platinen oder auch auf einer einzigen, die Wand 4 überbrückend sich über beide Fächer 2, 3 erstreckenden Platine gebildet sein.

Die Verdampfer 5, 6 sind Teil eines Kältemittelkreislaufs, der ferner in an sich bekannter Weise einen Verdichter 7, einen, z.B. an einer Rückwand des Gehäuses 1 angebrachten Verflüssiger 8, einen Trockner 9 und eine Kapillare 10 umfasst. Kältemittel, das im Verdichter 7 verdichtet und erwärmt worden ist, gibt seine Wärme am Verflüssiger 8 ab und kondensiert dabei. Das flüssige Kältemittel entspannt sich beim Durchgang durch die Kapillare 10 und erreicht von dort zunächst den Verdampfer 5 des Gefrierfachs 2, wo es unter niedrigem Druck verdampfen kann. Der Verdampfer 6 schließt stromabwärts an den Verdampfer 5 an, und sein Ausgang ist mit einem Sauganschluss des Verdichters 7 verbunden.

Eine Steuerschaltung 11 dient zum Ein- und Ausschalten des Verdichters anhand von Temperaturmesswerten, die von einem Verdampfer-Temperaturfühler 12 und einem Luft-Temperaturfühler 13 geliefert werden. Der Verdampfer-Temperaturfühler 12 ist in engem thermischem Kontakt mit einem der Verdampfer 5, 6 montiert. Fig. 1 zeigt den Verdampfer-Temperaturfühler 12 als durchgezogenen Umriss auf dem Verdampfer 6 des Normalkühlfachs 3 benachbart zu einem Kältemitteleinlass 14 des Verdampfers 6. Alternativ hierzu könnte der Verdampfer-Temperaturfühler 12 auch auf dem Verdampfer 5 des Gefrierfachs 2 benachbart zu einem Kältemittelauslass 15 desselben angeordnet sein, oder auch an einem beliebigen zwischen dem Auslass 15 und dem Einlass 14 liegenden Abschnitt der Kältemittelleitung. Die Anbringung am Verdampfer 6 ist bevorzugt, da der Verdampfer-Temperaturfühler 12 hier auch zum Erfassen einer Vereisung dienen bzw. der Steuerschaltung 11 eine Entscheidung ermöglichen kann, ob ein Abtauen des Verdampfers 6 nötig ist.

Der Messwert des Luft-Temperaturfühlers 13 soll möglichst genau die Lufttemperatur im Normalkühlfach 3 wiedergeben. Zu diesem Zweck ist der Luft-Temperaturfühler 13 in einer Wand des Gehäuses 1 zwischen deren Isolationsmaterialfüllung und einem das Normalkühlfach 3 begrenzenden Innenbehälter entfernt vom Verdampfer 6 angeordnet.

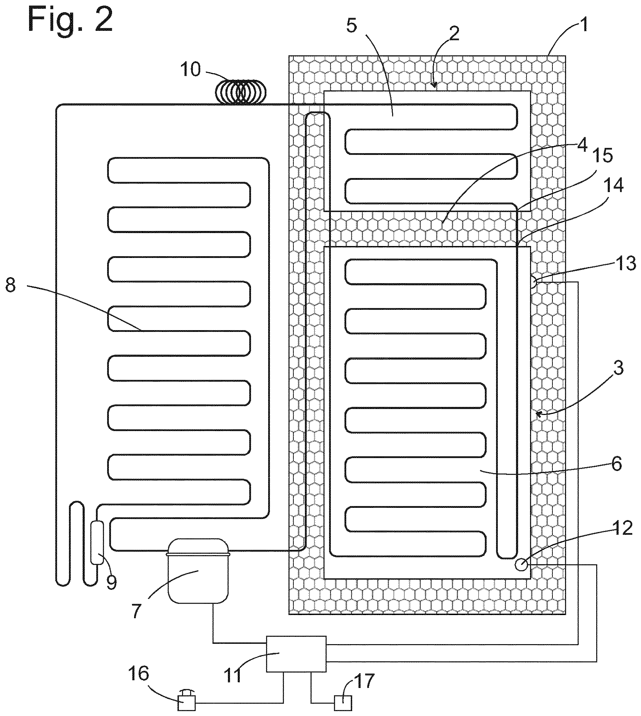

Fig. 2 zeigt eine Variante des Kältegeräts, die sich von der Ausgestaltung der Fig. 1 lediglich durch den Verlauf der Kältemittelleitung auf dem Verdampfer 6 unterscheidet. Vom Kältemitteleinlass 14 verläuft sie zunächst auf direktem Weg abwärts bis in eine untere Ecke des Verdampfers 6, in der auch der Verdampfer-Temperaturfühler 12 angebracht ist, um sich anschließend in Mäandern über die Fläche des Verdampfers 6 auszubreiten. So ist der Temperaturfühler 12 zwar auf gerader Linie weit vom Kältemitteleinlass 14 entfernt, gleichzeitig aber dennoch an einem stromaufwärtigen Bereich des Verdampfers 6 angeordnet, um eine Abkühlung durch in den Verdampfer 6 eindringendes flüssiges Kältemittel mit geringer Verzögerung zu erfassen.

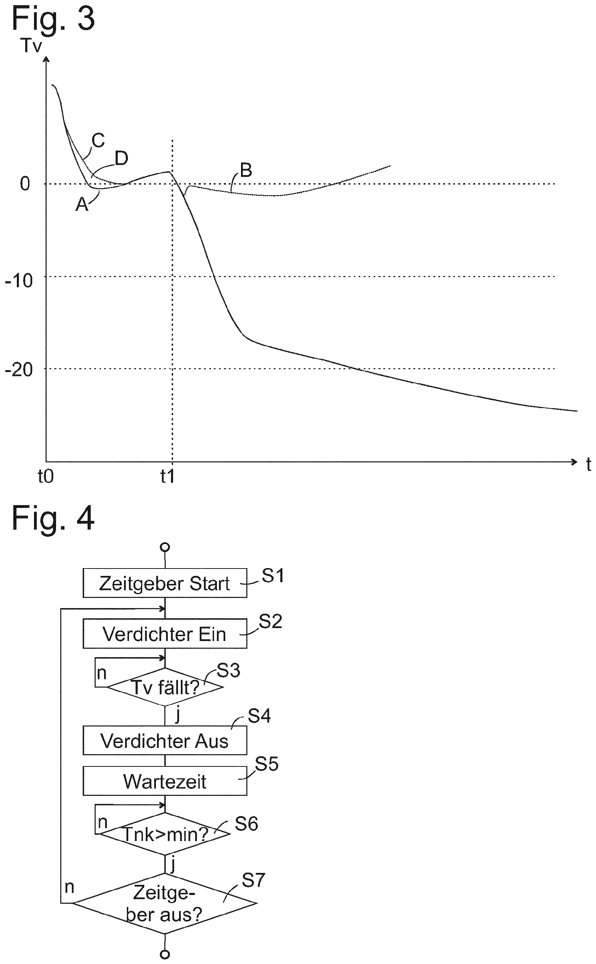

Eine Solltemperatur des Normalkühlfachs ist vom Benutzer einstellbar und beträgt typischerweise um die 4°C, und auf diesem Wert oder geringfügig darüber liegt auch die vom Verdampfer-Temperaturfühler 12 erfasste Temperatur Tv am Ende einer Ruhephase des Verdichters 7. Die Temperatur des Gefrierfachs 2 und seines Verdampfers 5 sollte bei normaler Funktion des Geräts zur gleichen Zeit deutlich tiefer, z. B. bei -18°C, liegen. Wenn die Steuerschaltung 11 den Verdichter 7 einschaltet, nimmt der Druck in den Verdampfern 5, 6 ab, das im kalten Verdampfer 5 gesammelte Kältemittel beginnt zu verdampfen und kühlt sich dabei ab. Der entstehende Dampf wird vom Verdichter 7 über den Verdampfer 6 abgesaugt und kühlt diesen. Der auf dem Verdampfer 6 gelegene Temperaturfühler 12 beginnt daher kurze Zeit nach Einschalten des Verdichters zum Zeitpunkt t0 eine erste Abkühlung zu registrieren, wie in Fig. 3 als durchgezogene Kurve A dargestellt. Ein darauf folgender schwacher Temperaturanstieg ist darauf zurückzuführen, dass im Verflüssiger 8 erst durch Druckaufbau und gleichzeitige Wärmeabgabe Kältemittel von Neuem verflüssigt werden muss, bevor der Kapillare flüssiges Kältemittel zugeführt werden kann, um dieses dann in den Verdampfern zu verdampfen. Dieses neu verflüssigte Kältemittel breitet sich nach Passieren der Kapillare allmählich im Verdampfer 5 aus. Nach einer gewissen Zeit erreicht es auch den Verdampfer 6.und bewirkt auch dort eine stärkere Abkühlung als zuvor das aus dem Verdampfer 5 abgesaugte gasförmige Kältemittel. Dies führt ab dem Zeitpunkt t1, typischerweise mehrere Minuten nach dem Start des Verdichters 7, zu einer weiteren Absenkung der Temperatur Tv. Nach weiteren etwa fünf Minuten verlangsamt sich der Temperaturabfall, und die Temperatur Tv konvergiert im Laufe des weiteren Verdichterbetriebs gegen einen stationären Wert von ca. -25°C.

Abweichungen von dem normalen Temperaturverlauf der Kurve A ergeben sich zum einen, wenn, unter den im Folgenden noch im Detail erläuterten Bedingungen, die Steuerschaltung 11 das Einsetzen des zweiten Temperaturabfalls zum Anlass nimmt, den Verdichter 7 wieder auszuschalten. In diesem Fall ergibt sich ein Temperaturverlauf, wie exemplarisch durch die Kurve B dargestellt: nach Ausschalten des Verdichters 7 setzt sich die Temperaturabnahme noch für kurze Zeit fort, da das bereits in den Verdampfer 6 gelangte flüssige Kältemittel den Temperaturfühler 12 zunächst noch weiter abkühlt. Nach kurzer Zeit ist dieses Kältemittel jedoch verdampft, so dass die Temperatur Tv wieder zu steigen beginnt.

Eine Abschwächung des unmittelbar auf das Einschalten des Verdichters 7 folgenden Temperaturabfalls, dargestellt durch die Kurve C, kann sich ergeben, wenn die Temperatur des Gefrierfachs 2 deutlich oberhalb ihres Sollbereichs liegt, sei es, weil ein Benutzer eine größere Menge warmen Kühlguts in das Gefrierfach 2 geladen hat, oder weil der Verdichter 7 lange Zeit ausgeschaltet gewesen ist.

Um ein zügiges Gefrieren von frisch in das Gefrierfach 2 geladenem Kühlgut zu gewährleisten, ist einer ersten Ausgestaltung der Erfindung zufolge das Kältegerät mit einem vom Benutzer betätigbaren Schalter 16 zum Aktivieren einer Schnellkühlfunktion ausgestattet. Ein Arbeitsverfahren der Steuerschaltung 11 gemäß dieser ersten Ausgestaltung ist in Fig. 4 als Flussdiagramm dargestellt. Bei Betätigung des Schnellkühlschalters 16 durch den Benutzer startet die Steuerschaltung 11 zunächst in Schritt S1 einen internen Zeitgeber, dessen Ablaufzeit, typischerweise zwischen 24 und 72 Stunden, die Zeitspanne festlegt, in der das Gerät nach Betätigung des Schalters 16 im Schnellkühlmodus verbleibt. Der nächste Schritt S2 ist ein Einschalten des Verdichters 7. Dieses Einschalten kann ohne Berücksichtigung der vom Temperaturfühler 13 erfassten Lufttemperatur Tnk des Normalkühlfachs 3 erfolgen.

In Schritt S3 wartet die Steuerschaltung 11 den Beginn des mit dem Vordringen von frischem flüssigem Kältemittel in den Verdampfer 6 verbundenen zweiten Temperaturabfall ab. Sobald sich dieser abzeichnet, sei es weil die zweite Abnahme der Temperatur Tv nach Einschalten des Verdichters 7 beginnt, weil die Geschwindigkeit der Temperaturabnahme nach Durchlaufen eines zeitweiligen Minimums wieder zunimmt oder weil die Temperatur Tv unter eine Grenztemperatur abfällt, die zwischen den Solltemperaturen des Gefrierfachs 2 und des Normalkühlfachs 3 festgelegt ist und hier z.B. -5°C betragen kann, wird in Schritt S4 der Verdichter 7 wieder ausgeschaltet. Es schließt sich eine Wartezeit S5 an, deren Länge so bemessen ist, dass in ihr das zum Zeitpunkt des Ausschaltens im Verdampfer 6 enthaltene flüssige Kältemittel vollständig verdampfen kann. Falls im Verlaufe dieser Wartezeit ein Anstieg von Tnk über eine vom Benutzer eingestellte Einschalt-Grenztemperatur Tein festgestellt wird, wird der Verdichterbetrieb wieder aufgenommen, bis die erforderliche Abkühlung des Normalkühlfachs 3 erreicht ist, und die Wartezeit S5 beginnt von Neuem.

Da eine Abkühlung des Normalkühlfachs 3 nicht völlig zu vermeiden ist, auch wenn der Verdichter 7 in Schritt S4 sofort wieder ausgeschaltet wird, wenn das flüssige Kältemittel den Temperaturfühler 12 erreicht, ist es nicht ausgeschlossen, dass mehrere solche kurze Verdichter-Betriebsphasen nacheinander auch zu einer Abkühlung des Normalkühlfachs 3 unter seinen Sollbereich führen. Daher wird in Schritt S6 die Temperatur Tnk des Normalkühlfachs 3 mit einer Mindesttemperatur verglichen, die unter dem Sollbereich für dieses Fach liegt und die keinesfalls unterschritten werden darf. Diese Mindesttemperatur wird typischerweise knapp über 0°C liegen. Wenn die Mindesttemperatur erreicht oder unterschritten ist, verharrt das Verfahren in Schritt S6, bis Tnk wieder über die Mindesttemperatur angestiegen ist.

Wenn anschließend in Schritt S7 der Zeitgeber noch nicht abgelaufen ist, kehrt das Verfahren nach S2 zurück; anderenfalls endet der Schnellkühlmodus.

Ergebnis dieses Verfahren ist, dass der Verdampfer 5 im Schnellkühlmodus praktisch ständig flüssiges Kältemittel enthält und den Inhalt des Gefrierfachs 2 mit hoher Leistung kühlen kann, während die Kühlung des Normalkühlfachs 3 allenfalls geringfügig verstärkt ist.

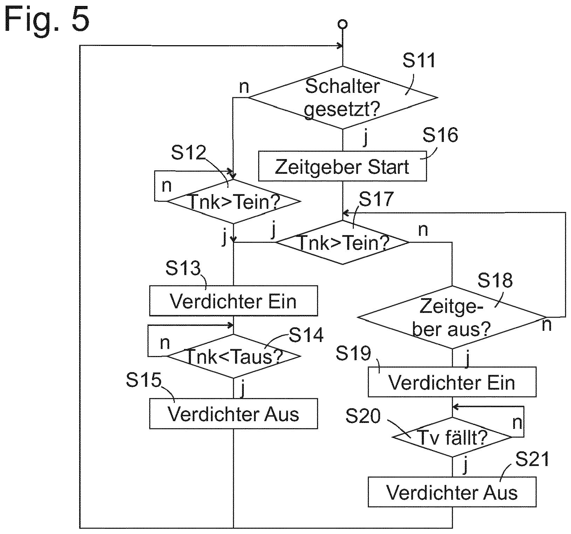

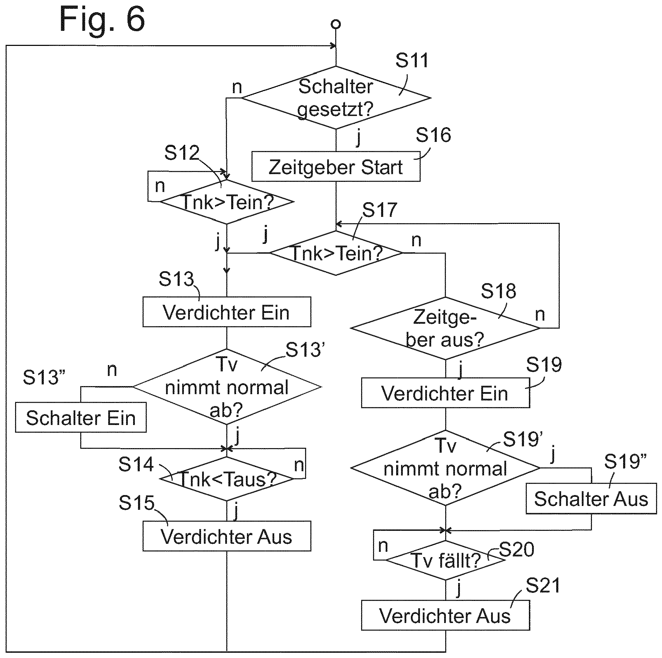

Fig. 5 ist ein Flussdiagramm eines Arbeitsverfahrens der Steuerschaltung 11 gemäß einer zweiten Ausgestaltung der Erfindung. Dieses Verfahren kann für sich allein oder auch zeitgleich mit demjenigen der Fig. 4 ausgeführt werden. Da das Verfahren der Fig. 5 zyklisch wiederholt wird, kann die Beschreibung mit einem beliebigen seiner Schritte beginnen, hier z.B. unmittelbar anschließend an ein Ausschalten des Verdichters 7. Der erste Verfahrensschritt ist dann ein Schritt S11, in dem überprüft wird, ob ein für die Umgebungstemperatur repräsentativer Schalter gesetzt ist. Bei diesem Schalter kann es sich um einen physischen Schalter an einer Benutzerschnittstelle des Geräts wie den Schalter 16 handeln, an dem ein Benutzer einstellen kann, ob das Gerät z.B. in einem geheizten oder einem ungeheizten Raum aufgestellt ist. Es kann sich aber auch um einen logischen Schalter wie etwa eine Speicherzelle 17 handeln, wie später noch in Verbindung mit Fig. 6 genauer erläutert. Wenn der Schalter 16 oder 17 nicht gesetzt ist, was bei Aufstellung des Geräts in normal warmer Umgebung der Fall sein sollte, dann setzt eine an sich bekannte Thermostatsteuerung des Verdichterbetriebs ein: in Schritt S12 wird abgewartet, bis die Temperatur Tnk des Normalkühlfachs 3 eine Einschaltschwelle Tein überschreitet, um dann in Schritt S13 den Verdichter 7 einzuschalten. Anschließend wird die Unterschreitung einer Ausschaltschwelle Taus abgewartet (S14), der Verdichter 7 wird in Schritt S15 wieder ausgeschaltet, und das Verfahren kehrt zum Ausgangspunkt zurück.

Ist hingegen in Schritt S11 der Schalter 16 oder 17 gesetzt, dann verzweigt das Verfahren zu Schritt S16, in welchem ein Zeitgeber gestartet wird. Die Ablaufzeit des Zeitgebers ist etwas länger als die normalerweise bei Aufstellung des Kältegeräts in warmer Umgebung zu erwartende Dauer einer Ruhephase des Verdichters 7, d.h. die Zeitspanne zwischen Aus- und Wiedereinschalten des Verdichters 7. In Schritt S17 folgt wie in Schritt S12 ein Vergleich mit der Einschaltschwelle Tein, und im Falle ihrer Überschreitung verzweigt das Verfahren zum Schritt S13 der Thermostatregelung. Wenn die Einschaltschwelle Tein noch nicht erreicht ist, wird stattdessen in Schritt S18 geprüft, ob der Zeitgeber abgelaufen ist. Wenn nicht, kehrt das Verfahren zu Schritt S17 zurück, anderenfalls wird der Verdichter in S19 eingeschaltet. Die Steuerschaltung 11 wartet nun in Schritt S20 auf den zweiten Abfall der Verdampfertemperatur Tv oder einer anderen geeigneten Bedingung, die das Eintreffen des frischen flüssigen Kältemittels am Verdampfer 6 anzeigt. Sobald dies geschieht, wird der Verdichter in Schritt S21 wieder ausgeschaltet und das Verfahren kehrt wieder zum Ausgangspunkt zurück.

Durch die Schritte S19 bis S21 wird gezielt das Gefrierfach 2 gekühlt, unabhängig davon, ob das Normalkühlfach 3 Kältebedarf hat oder nicht, und im Wesentlichen ohne letzteres mitzukühlen. Zusätzliche Energie für die gezielte Kühlung des Gefrierfachs 2 wird nur dann aufgewandt, wenn ein langes Ausschaltzeitintervall des Verdichters 7 tatsächlich auf eine niedrige Umgebungstemperatur schließen lässt.

Fig. 6 zeigt eine Weiterentwicklung des Verfahrens aus Fig. 5, bei der das Setzen des Schalters 17 vollautomatisch und nach Bedarf von der Steuerschaltung 11 selber vorgenommen wird. Schritte, die denjenigen der Fig. 5 entsprechen, sind mit denselben Bezugszeichen versehen und werden nicht erneut erläutert. Im Laufe der Thermostatsteuerung der Schritte S12 bis S15 ist hinter das Einschalten des Verdichters S13 ein zusätzlicher Schritt S13' des Überwachens der Entwicklung der Verdampfertemperatur Tv eingeschoben. Wenn diese im Zeitintervall vom Einschalten des Verdichters 7 bis zum Eintreffen des frischen flüssigen Kältemittels am Temperaturfühler 12 einen normalen Verlauf entsprechend der Kurve A aus Fig. 3 zeigt, dann geht das Verfahren mit Schritt S14 normal und wie mit Bezug auf Fig. 5 beschrieben weiter. Wenn hingegen die Abnahme der Temperatur Tv schwächer oder langsamer als normal ist, was, wie mit Bezug auf Fig. 3 erläutert, auf eine zu hohe Temperatur des Gefrierfachs 2 hindeutet, dann wird vor Erreichen des Schritts S14 der Schalter 17 in Schritt S13" eingeschaltet.

Die Prüfung, ob die Temperaturabnahme normal ist, kann beispielsweise erfolgen, indem die Steuerschaltung 11 die Differenz zwischen dem tatsächlich gemessenen Verlauf der Temperatur Tv und dem erwarteten, der Kurve A entsprechenden Verlauf integriert und eine nicht normale Temperaturabnahme feststellt, wenn dieses der von den Kurven C und A von Fig. 3 eingeschlossenen Fläche D entsprechende Integral einen vorgegebenen Grenzwert überschreitet.

Ein Schritt S19' des Überwachens der Abnahme der Temperatur Tv folgt auch auf den Schritt S19 des Einschaltens des Verdichters. Die Beurteilung kann nach den gleichen Kriterien erfolgen wie in Schritt S13'. Wenn dabei eine normale Temperaturabnahme festgestellt wird, wird der Schalter in Schritt S19" wieder ausgeschaltet, anderenfalls geht das Verfahren direkt zu Schritt S20 über. So passt die Steuerschaltung 11 die Betriebsphase des Verdichters 7 vollautomatisch, ohne dass es des Eingriffs durch einen Benutzer bedarf, an eine kalte bzw. warme Umgebung an und hält unabhängig von der Umgebungstemperatur sowohl das Normalkühlfach 3 als auch das Gefrierfach 2 in einem geeigneten Temperaturbereich, ohne dass dafür eine Messung der Temperatur im Gefrierfach 2 selber erforderlich wäre.

## Patentansprüche

1. Kältegerät, insbesondere Haushaltskältegerät, mit einem Verdichter (7), einem wärmeisolierenden Gehäuse (1), das einen in wenigstens zwei unterschiedliche Temperaturzonen (2, 3) unterteilten Innenraum aufweist, einem eine erste der Temperaturzonen (3) kühlenden Verdampfer (6), an dem ein erster Temperaturfühler (12) angeordnet ist, und einer Steuerschaltung (11) zum Steuern des Betriebs des Verdichters (7), wobei ein eine zweite der Temperaturzonen (2) kühlender zweiter Verdampfer (5) mit dem ersten Verdampfer (6) und dem Verdichter in Reihe verbunden ist, wobei der erste Temperaturfühler (12)
- in einer stromaufwärtigen Region des stromabwärtigen Verdampfers (6) oder
- an einem zwischen einem Kältemittelauslass (15) des stromaufwärtigen Verdampfers (5) und einem Kältemitteleinlass (14) des stromabwärtigen Verdampfers (6) liegenden Abschnitt der Kältemittelleitung oder
- in einer stromabwärtigen Region des stromaufwärtigen Verdampfers (5) angeordnet ist, **dadurch gekennzeichnet, dass**
die Steuerschaltung (11) einen Betriebsmodus aufweist, in dem sie eingerichtet ist, das Eindringen von flüssigem Kältemittel in den stromabwärtigen Verdampfer (6) anhand einer Temperaturabnahme, der der erste Temperaturfühler (12) bei eingeschaltetem Verdichter (7) ausgesetzt ist, mit geringer Verzögerung zu erkennen und daraufhin den Verdichter (7) auszuschalten (S4; S21), um so bei im Wesentlichen mit flüssigem Kältemittel gefülltem stromaufwärtigem Verdampfer (5) die Menge an flüssigem Kältemittel im stromabwärtigen Verdampfer (5) gering zu halten.

2. Kältegerät nach einem der vorhergehenden Ansprüche, **dadurch gekennzeichnet, dass** die vom stromaufwärtigen Verdampfer (5) gekühlte Temperaturzone (2) kälter ist als die vom stromabwärtigen Verdampfer (6) gekühlte Temperaturzone (3).

3. Kältegerät nach Anspruch 2, **dadurch gekennzeichnet, dass** die Temperaturabnahme, die zum Ausschalten (S4; S21) des Verdichters (7) führt, die zweite ist, die nach Einschalten (S2; S19) des Verdichters (7) erfassbar ist.

4. Kältegerät nach Anspruch 2, **dadurch gekennzeichnet, dass** die Temperaturabnahme erst dann zum Ausschalten des Verdichters führt, wenn die Geschwindigkeit der Temperaturabnahme ein Minimum durchlaufen hat.

5. Kältegerät nach Anspruch 2, **dadurch gekennzeichnet, dass** die Temperaturabnahme erst dann zum Ausschalten des Verdichters führt, wenn die von dem Temperaturfühler erfasste Temperatur eine Grenztemperatur unterschritten hat, die niedriger ist als eine Solltemperatur der vom stromabwärtigen Verdampfer gekühlten Temperaturzone.

6. Kältegerät nach einem der vorhergehenden Ansprüche, **dadurch gekennzeichnet, dass** die Steuerschaltung (11) eingerichtet ist, den Verdichter (7) einzuschalten (S13; S19), wenn die Temperatur in der vom stromabwärtigen Verdampfer gekühlten Temperaturzone einen Grenzwert (Tein) übersteigt (S12) oder wenn die seit dem letzten Ausschalten des Verdichters verstrichene Zeit einen Grenzwert übersteigt (S18), und den Verdichter (7) nur dann bei Erkennung der Temperaturabnahme wieder auszuschalten (S21), wenn das Einschalten (S19) durch Überschreitung des Grenzwerts der Zeit (S18) verursacht war.

7. Kältegerät nach einem der vorhergehenden Ansprüche, **dadurch gekennzeichnet, dass** der Betriebsmodus durch einen Benutzer einschaltbar ist.

8. Kältegerät nach Anspruch 7, **dadurch gekennzeichnet, dass** die Steuerschaltung (11) eingerichtet ist, den Betriebsmodus nach einer vorgegebenen Wartezeit (S7) auszuschalten.

9. Kältegerät nach einem der vorhergehenden Ansprüche, **dadurch gekennzeichnet, dass** die Steuerschaltung (11) eingerichtet ist, den Betriebsmodus einzuschalten, wenn ein beim Einschalten (S13) des Verdichters (7) erfasster Temperaturabfall schwächer ist als ein erwarteter Wert (S13').

10. Kältegerät nach einem der vorhergehenden Ansprüche, **dadurch gekennzeichnet, dass** die Steuerschaltung (11) eingerichtet ist, die relative Einschaltdauer des Verdichters (7) zu erfassen und den Betriebsmodus einzuschalten, wenn die relative Einschaltdauer unter einem Grenzwert liegt.

## Claims

1. Refrigeration device, in particular household refrigeration device, having a compressor (7), a heat-insulating housing (1) which has an inner compartment divided into at least two different temperature zones (2, 3), an evaporator (6) cooling a first of the temperature zones (3) and on which a first temperature sensor (12) is arranged, and a control circuit (11) for controlling the operation of the compressor (7), wherein a second compressor (5) cooling a second of the temperature zones (2) is connected to the first evaporator (6) and the compressor in series, wherein the first temperature sensor (12) is arranged
- in an upstream region of the downstream evaporator (6) or
- on a section of the refrigerant pipe lying between a refrigerant outlet (15) of the upstream evaporator (5) and a refrigerant inlet (14) of the downstream evaporator (6) or
- in a downstream region of the upstream evaporator (5),
**characterised in that** the control circuit (11) has an operating mode in which it is configured to detect with a small delay the penetration of liquid refrigerant into the downstream evaporator (6) based on a temperature drop to which the first temperature sensor (12) is exposed when the compressor (7) is switched on, and thereupon to switch off (S4; S21) the compressor (7), in order to keep the volume of liquid refrigerant low in the downstream evaporator (5) when the upstream evaporator (5) is substantially filled with liquid refrigerant.

2. Refrigeration device according to one of the preceding claims, **characterised in that** the temperature zone (2) cooled by the upstream evaporator (5) is colder than the temperature zone (3) cooled by the downstream evaporator (6).

3. Refrigeration device according to claim 2, **characterised in that** the temperature drop which results in the compressor (7) being switched off (S4; S21) is the second one that can be detected after the compressor (7) is switched on (S2; S19).

4. Refrigeration device according to claim 2, **characterised in that** the temperature drop only results in the compressor being switched off if the rate of the temperature drop has passed a minimum.

5. Refrigeration device according to claim 2, **characterised in that** the temperature drop results in the compressor being switched off only if the temperature detected by the temperature sensor has fallen below a limit temperature that is lower than a target temperature of the temperature zone cooled by the downstream evaporator.

6. Refrigeration device according to one of the preceding claims, **characterised in that** the control circuit (11) is configured to switch on (S13; S19) the compressor (7) if the temperature in the temperature zone cooled by the downstream evaporator exceeds (S12) a limit value (Tein) or if the time elapsed since the last switch-off of the compressor exceeds (S18) a limit value, and to switch off (S21) the compressor (7) again only when it detects the temperature drop, if the switch-on (S 19) was caused by the limit value of the time (S18) being exceeded.

7. Refrigeration device according to one of the preceding claims, **characterised in that** the operating mode can be switched on by a user.

8. Refrigeration device according to claim 7, **characterised in that** the control circuit (11) is configured to switch off the operating mode after a predetermined wait time (S7).

9. Refrigeration device according to one of the preceding claims, **characterised in that** the control circuit (11) is configured to switch on the operating mode if a temperature decrease detected when the compressor (7) is switched on (S13) is lower than an expected value (S13').

10. Refrigeration device according to one of the preceding claims, **characterised in that** the control circuit (11) is configured to detect the duty ratio of the compressor (7) and to switch on the operating mode if the duty ratio is below a limit value.

## Revendications

1. Appareil frigorifique, en particulier appareil frigorifique ménager, avec un condensateur (7), une carcasse calorifuge (1) qui présente un espace intérieur divisé en au moins deux zones de température différentes (2, 3), un évaporateur (6) réfrigérant une première des zones de température (3), sur laquelle un premier capteur de température (12) est disposé, et un circuit de commande (11) pour la commande du fonctionnement du condensateur (7), dans lequel un deuxième évaporateur (5) réfrigérant une deuxième des zones de température (2) est relié en série avec le premier évaporateur (6) et le condensateur, dans lequel le premier capteur de température (12)
- est disposé dans une région amont de l'évaporateur aval (6)
ou
- sur une section de la conduite d'agent frigorifique située entre une sortie d'agent frigorifique (15) de l'évaporateur amont (5) et une entrée d'agent frigorifique (14) de l'évaporateur aval (6) ou
- est disposé dans une région aval de l'évaporateur amont (5), **caractérisé en ce que** le circuit de commande (11) présente un mode d'exploitation dans lequel il est aménagé afin de détecter avec un faible retard la pénétration d'agent frigorifique fluide dans l'évaporateur aval (6) à l'aide d'une diminution de température, à laquelle le premier capteur de température (12) est soumis lorsque le condensateur (7) est allumé, et d'éteindre (S4 ; S21) ensuite le condensateur (7), afin de maintenir la quantité d'agent frigorifique fluide dans l'évaporateur aval (5) à un niveau faible en présence d'un évaporateur amont (5) essentiellement rempli d'agent frigorifique fluide.

2. Appareil frigorifique selon l'une des revendications précédentes, **caractérisé en ce que** la zone de température (2) réfrigérée par l'évaporateur amont (5) est plus froide que la zone de température (3) réfrigérée par l'évaporateur aval (6).

3. Appareil frigorifique selon la revendication 2, **caractérisé en ce que** la diminution de température induisant l'extinction (S4 ; S21) du condensateur (7) est la deuxième détectable après l'allumage (S2 ; S19) du condensateur (7).

4. Appareil frigorifique selon la revendication 2, **caractérisé en ce que** la diminution de température induit seulement l'extinction du condensateur lorsque la vitesse de la diminution de température a franchi un minimum.

5. Appareil frigorifique selon la revendication 2, **caractérisé en ce que** la diminution de température induit seulement l'extinction du condensateur lorsque la température détectée par le capteur de température a dépassé une température seuil inférieure à une température de consigne de la zone de température réfrigérée par l'évaporateur aval.

6. Appareil frigorifique selon l'une des revendications précédentes, **caractérisé en ce que** le circuit de commande (11) est aménagé afin d'allumer (S13 ; S19) le condensateur (7) lorsque la température dans la zone de température réfrigérée par l'évaporateur aval excède (S12) une valeur limite (Tein) ou lorsque le temps écoulé depuis la dernière extinction du condensateur excède (S18) une valeur limite, et d'éteindre (S21) seulement à nouveau le condensateur (7) lors de la détection de la diminution de température, lorsque l'allumage (S19) a été causé par un dépassement de la valeur limite du temps (S18).

7. Appareil frigorifique selon l'une des revendications précédentes, **caractérisé en ce que** le mode d'exploitation est activable par un utilisateur.

8. Appareil frigorifique selon la revendication 7, **caractérisé en ce que** le circuit de commande (11) est aménagé afin de désactiver le mode d'exploitation après un temps d'attente (S7) défini au préalable.

9. Appareil frigorifique selon l'une des revendications précédentes, **caractérisé en ce que** le circuit de commande (11) est aménagé afin d'activer le mode d'exploitation lorsqu'une diminution de température détectée lors de l'allumage (S13) du condensateur (7) est plus faible qu'une valeur attendue (S13').

10. Appareil frigorifique selon l'une des revendications précédentes, **caractérisé en ce que** le circuit de commande (11) est aménagé afin de détecter la durée de fonctionnement relative du condensateur (7) et d'activer le mode d'exploitation lorsque la durée de fonctionnement relative est inférieure à une valeur limite.
